# EUROPÄISCHE PATENTANMELDUNG

(11) **EP 2 202 386 A1**
(43) Veröffentlichungstag der Anmeldung: **30.06.2010**
(21) Anmeldenummer: 08172733.1
(22) Anmeldetag: 23.12.2008
(51) Int. Cl.: F01D 11/00, F01D 25/18, F16J 15/34

(54) **Abgasturbolader**

(71) Anmelder: ABB Turbo Systems AG, 5400 Baden (CH)
(72) Erfinder: Kopp, Adrian, CH-5416 Kirchdorf (CH); Thiele, Martin, CH-5236 Remigen (CH); Häge, Christoph, CH-5323 Rietheim (CH)
(74) Vertreter: ABB Patent Attorneys

(57) **Zusammenfassung**

Die Abdichtung des Verdichterrades (7) bezüglich des Lagergehäuses (9) umfasst ein ringförmiges Dichtelement (4), welches mit einer Wellenkante (10) eine Dichtgrenzfläche bildet und welches mit einer Federkraft in Richtung der Wellenkante (10) beaufschlagt ist. Durch die äussere Federkraft werden die Druckkräfte, die auf das Dichtelement wirken, abhängig von der Richtung der Druckdifferenz, entweder kompensiert oder verstärkt.

Die Abdichtung des Ölraumes im Lagergehäuse des Abgasturboladers hin zur Welle ist dadurch von den Druckschwankungen im Radrückraum des Verdichters nicht oder nur wenig beeinflusst.

## Beschreibung

### Technisches Gebiet

Die Erfindung bezieht sich auf das Gebiet der aufgeladenen Brennkraftmaschinen. Sie betrifft eine Aufladevorrichtung für eine solche Brennkraftmaschine.

### Stand der Technik

Für die Leistungssteigerung einer Brennkraftmaschine werden heutzutage standardmässig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt und in Drehenergie ungewandelt. Die gewonnene Drehenergie wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Ein Abgasturbolader setzt sich aus einem Rotor, bestehend aus einer Welle, einem Verdichterrad und einem Turbinenrad, aus strömungsführenden Gehäuseteilen (Verdichtergehäuse resp. Turbinengehäuse) und aus dem Lagergehäuse zusammen. Die Welle ist im Lagergehäuse in einem oder mehreren Lagern gelagert, welche mit einem Schmiermittel geschmiert werden. Um ein Austreten des Schmiermittels in Richtung Turbine oder Verdichter zu verhindern, weist die Welle im Lagergehäuse je eine Abdichtung Richtung Turbine und Verdichter auf.

Die Abdichtung des Ölraumes im Lagergehäuse des Abgasturboladers hin zur Welle auf der Seite des Verdichters kann mittels eines oder mehreren Kolbenringen erfolgen. Nachfolgend wird der Einfachheit halber die Abdichtung mittels eines Kolbenringes beschrieben. Dieser Kolbenring weist eine leichte Vorspannung auf und ist im Sitz des Lagergehäuses geklemmt. Durch den Druckunterschied zwischen dem Luftmassenstrom, welcher durch den Verdichter verdichtet wird und dem Druck im Ölraum des Lagergehäuses, kommt es im Betrieb des Turboladers zu einer Verschiebung des Kolbenringes in Richtung Turbine und somit zu einem Einschleifen des Kolbenringes in der drehenden Gegenpartie in Richtung Turbine. Durch dieses Einschleifen an der Kolbenringnute wird der sich einstellende Spalt zwischen Kolbenring und der sich drehenden Gegenpartie auf der Welle reduziert und die Dichtwirkung dieser Kolbenringabdichtung verbessert. Das Einschleifen des Kolbenringes erfolgt so lange, bis der Kolbenring an der umlaufenden Anschlagkante im Sitz des Lagergehäuses ansteht.

EP 1 130 220 A2 offenbart eine Rotationsdichtung zum Abdichten eines rotierenden Bauteils gegen ein stehendes Gehäuse mittels eines Kolbenringes, welcher durch Reiben an dem rotierenden Teil in axialer Richtung eingeschliffen wird. Um das zu starke Abschleifen des Kolbenrings zu verhindern, ist am Gehäuse ein Anschlag vorgesehen, welcher die Verschiebbarkeit des Kolbenrings in axialer Richtung begrenzt.

Der Druck im Ölraum des Lagergehäuses ist näherungsweise konstant und durch die Verbindung des Ölraumes zu dem Kurbelgehäuse des Motors, das entlüftet wird, herrscht im Ölraum des Abgasturboladers Atmosphärendruck.

Bei Volllastbetrieb des Motors herrscht im Radrückraum des Verdichters ein höherer Druck als im Ölraum des Lagergehäuses, über dem Dichtelement liegt eine positive Druckdifferenz an, was bezüglich einer möglichen Ölleckage unkritisch ist.

Bei einem Unterdruck im Radrückraum des Verdichters liegt hingegen über dem Dichtelement eine negative Druckdifferenz an. Dies kann je nach Höhe des Unterdruckes zu einer Heranführung des Schmiermittels in den Radrückraum führen.

### Kurze Darstellung der Erfindung

Der vorliegenden Erfindung liegt die Aufgabe zugrunde, ein Dichtelement für die Abdichtung des Ölraumes im Lagergehäuse des Abgasturboladers hin zur Welle auf der Seite des Verdichters zu schaffen, welches von den Druckschwankungen im Radrückraum des Verdichters nicht oder nur wenig beeinflusst wird.

Erfindungsgemäss wird dies mit einem Dichtelement erreicht, welches mittels einer äusseren Kraft in seiner optimalen Lage gehalten wird. Diese Kraft kann durch ein oder mehrere federnde Elemente auf das Dichtelement aufgebracht werden. Durch die äussere Kraft werden die Druckkräfte, die auf das Dichtelement wirken, abhängig von der Richtung der Druckdifferenz, entweder kompensiert oder verstärkt.

Das Dichtelement ist als ein Dichtring ausgebildet, der verschiebbar in einem Sitz des Lagergehäuses sitzt. Zwischen der Welle und dem Lagergehäuse ist ein Spalt ausgebildet, in welchem der mit der Federkraft beaufschlagte Dichtring angeordnet ist. Der Dichtring wird erfindungsgemäss durch ein auf eine erste Stirnseite wirkendes federndes Element, beispielsweise durch eine Feder, durch Federpakete, durch Elastomere oder durch extern zugeführte, auf den Dichtring wirkende Druckluft in Richtung Turbine geschoben. Mit der gegenüberliegenden Stirnseite liegt der Dichtring an einer Kante der Welle, oder einer Kante eines mit der Welle rotierenden Hilfsbauteils an, wodurch es im Betrieb zu einem Einschleifen des Dichtringes an dieser Kante kommt. Das Einschleifen ist optional in axiale Richtung begrenzt, indem es solange erfolgt, bis der Dichtring an einem Anschlag anliegt. Der Anschlag kann dabei als formschlüssige Begrenzung in der Form eines Axialanschlags oder als kraftschlüssige Begrenzung in form eines sich erweiternden Sitzes ausgeführt werden.

Bei Unterdruck im Bereich des Radrückraums bildet sich über dem Dichtring eine Druckdifferenz aus, welche den Dichtring mit einer Kraft beaufschlagt, wobei diese Kraft und die Federkraft in die gleiche Richtung wirken.

Bei Volllastbetrieb des Motors herrscht im Radrückraum des Verdichters ein höherer Druck als im Ölraum des Lagergehäuses, über dem Dichtelement liegt folglich eine positive Druckdifferenz an, die der äusseren Kraft, die auf das Dichtelement wirkt, entgegenwirkt. Damit eine vollständige Kompensation der äusseren Kraft nicht auftreten kann, ist diese vorteilhafterweise grösser zu wählen als die Druckkraft, die durch die grösste im Betrieb zu erwartende positive Druckdifferenz auftritt.

Da die positive Druckdifferenz einen grösseren absoluten Betrag erreicht ist vorteilhafterweise die wirksame Fläche des Dichtringes in Richtung des Radrückraumes des Verdichters kleiner als die wirksame Fläche des Dichtringes in Richtung des Ölraumes des Lagergehäuses auszubilden. Durch eine derartige Optimierung des Flächenverhältnisses kann die Dichtwirkung des Dichtelementes zusätzlich verbessert werden.

Zur besseren Dichtwirkung kann der Ring noch zusätzlich abgedichtet werden. Die Abdichtung des Sitzes im Lagergehäuse zu dem Ring erfolgt in diesem Fall mit einem elastischen Element, das entweder in einer Nut im Sitz des Ringes oder in einer Nut im Sitz des Lagergehäuses angeordnet ist.

Der Dichtring im Sitz des Lagergehäuses ist optional gegen Verdrehen gesichert, durch eine kraft- oder formschlüssige Verbindung des Dichtringes mit dem Lagergehäuse.

Die erfindungsgemässe Dichtung kann mit einem weiteren Dichtelement, beispielsweise einem herkömmlichen Kolbenring ergänzt werden.

### Kurze Beschreibung der Zeichnungen

Nachfolgend sind anhand der Zeichnungen Ausführungsformen des erfindungsgemässen Abgasturboladers beschrieben. Hierbei zeigt
- Fig. 1: einen entlang der Abgasturboladerwelle geführten Schnitt durch einen Abgasturbolader gemäss dem Stand der Technik,
- Fig. 2: einen vergrössert dargestellten Ausschnitt des Bereichs der Abdichtung des Verdichterrades gegenüber der Abgasturboladerwelle mit einer ersten Ausführungsform der erfindungsgemässen Abdichtung,
- Fig. 3: einen vergrössert dargestellten Ausschnitt des Bereichs der Abdichtung des Verdichterrades gegenüber der Abgasturboladerwelle mit einer zweiten Ausführungsform der erfindungsgemässen Abdichtung,
- Fig. 4: einen vergrössert dargestellten Ausschnitt des Bereichs der Abdichtung des Verdichterrades gegenüber der Abgasturboladerwelle mit der ersten Ausführungsform der erfindungsgemässen Abdichtung nach Fig. 2, ergänzt mit einem zusätzlichen Dichtelement.

### Weg zur Ausführung der Erfindung

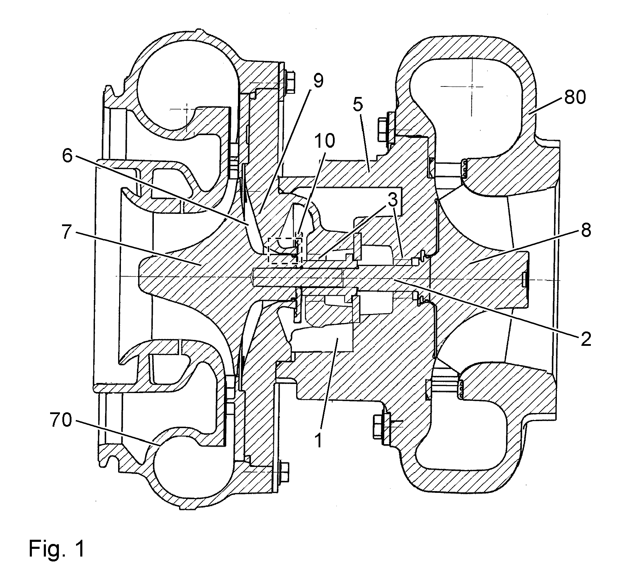

Fig. 1 zeigt einen herkömmlichen Abgasturbolader mit einer Turbine 8 und einem Verdichter 7. Die Laufrad der Turbine ist im Turbinengehäuse 80 angeordnet und wird in der dargestellten Ausführungsform schräg zur Radialen angeströmt (Mixed-Flow Turbine). Das Laufrad des Verdichters ist im Verdichtergehäuse 70 angeordnet. Die beiden Laufräder sind über eine gemeinsame Welle 2 miteinander verbunden. Die Welle ist im Lagergehäuse 5 in mehreren Lagern 3 gelagert. Im Bereich der Lager 3 der Welle 2 umfasst das Lagergehäuse 5 einen Hohlraum, welcher fortan als Ölraum 1 bezeichnet wird. Im Ölraum 1 wird das Schmieröl den Lagern zu oder abgeführt und es zirkuliert ölgetränkte Luft. Das Gehäuse umfasst zwei Lagergehäuseteile. Ein erstes Lagergehäuseteil 9 ist zwischen dem Strömungskanal des Verdichters und dem Ölraum 1 angeordnet. Das zweite Lagergehäuseteil 5 ist zwischen dem Strömungskanal der Turbine und dem Ölraum angeordnet. Im Rücken des Laufrades des Verdichters 7 erstreckt sich zwischen dem Laufrad und dem Lagergehäuse 9 ein Hohlraum, welcher fortan als Radrückraum 6 bezeichnet wird.

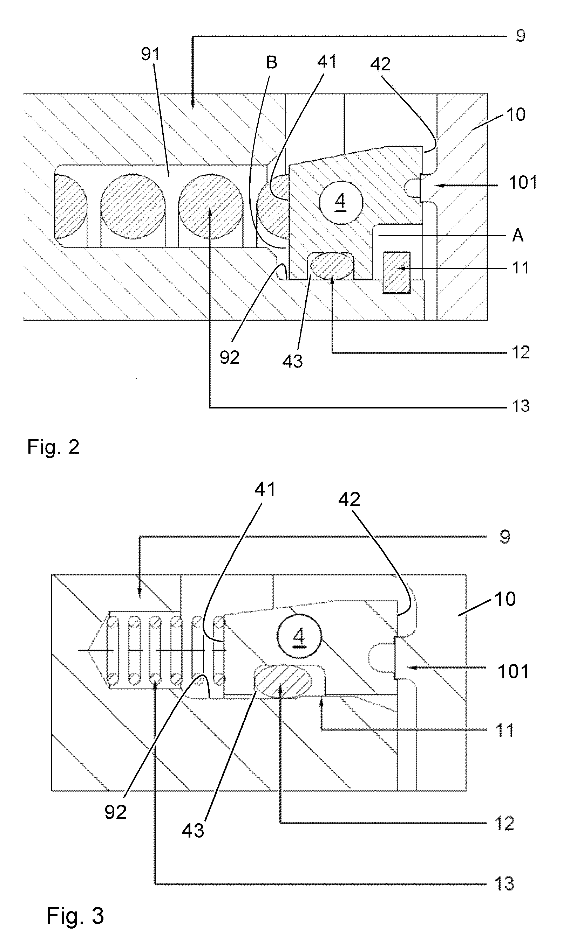

Die erfindungsgemässe Abdichtung des Radrückraums 6 gegenüber dem Ölraum 1 des Lagergehäuses wird nachfolgend anhand der Detaildarstellungen in den Fig. 2 bis 4 erläutert. Die Detaildarstellungen zeigen jeweils vergrössert den in Fig. 1 mit einem gestrichelten Rechteck markierten Bereich zwischen Radrückraum 6 und Lager 3.

Der Ausschnitt gemäss Fig. 2 zeigt das Lagergehäuse 9 sowie eine auf der Welle angeordnete und mit der Welle mitdrehende Scheibe 10. Zwischen dem nicht rotierenden Lagergehäuse 9 und der rotierenden Scheibe 10 ist ein Spalt ausgebildet. Im Spalt ist das Dichtelement in Form eines umlaufenden Dichtringes 4 angeordnet. Die Abdichtung des Spaltes mittels des Dichtringes 4 erfolgt dabei einerseits auf der Innenseite des Dichtringes gegenüber einem Sitz 92 auf dem Lagergehäuse und andererseits gegenüber einer vorstehenden Kante 101 an der Scheibe 10. Die Kante 101 kann auch als eine aussenliegende Kante der Scheibe 10 oder aber als eine hervorstehende oder aussenliegende Kante an der Welle selber ausgebildet sein. Gegenüber der Kante 101 weist der Dichtring 4 eine Stirnseite 42 auf, welche mit der Kante 101 zusammen eine Dichtgrenzfläche bildet. Im Bereich der Dichtgrenzfläche wird es im Betrieb zu einem Einschleifen des Dichtrings 4 kommen, d.h. die Kante 101 wird im Dichtring 4 Material abschleifen und es wird eine umlaufende Nut geformt, wie in der Figur angedeutet.

Erfindungsgemäss ist der Dichtring 4 mit einer Federkraft beaufschlagt, welche den Dichtring in Richtung der Kante 101 drückt. In der dargestellten Ausführungsform wird die Federkraft auf den Dichtring 4 durch eine in einer umlaufenden Bohrung 91 im Lagergehäuse 9 gelagerten Feder 13 ausgeübt. Anstelle einer Feder mit einem grossen Durchmesser können, wie dies in der Ausführungsform nach Fig. 3 angedeutet ist, mehrere kleine Federn entlang des Umfangs des Dichtringes 4 für die Federkraft in Richtung der Kante 101 sorgen. Alternativ zu einfachen Federn können auch Federpakete oder Elastomere eingesetzt werden, oder es kann mittels Druckluft, welche von extern diesem Bereich zugeführt wird, eine entsprechende Kraft auf den Dichtring bewirkt werden.

Optional kann der Dichtring 4 radial gegen innen mittels eines zusätzlichen Dichtelements 12 gegenüber dem Sitz 92 auf dem Lagergehäuse 9 abgedichtet werden. Das zusätzliche Dichtelement 12 wird dabei in einer Nut 43 im Dichtring 4 oder in einer Nut im Lagergehäuse geführt.

Um die axiale Verschiebbarkeit des Dichtringes 4 auf dem Sitz 92 des Lagergehäuses 9 und damit den oben beschriebenen Einschleifprozess zu begrenzen, kann optional ein Anschlag 11 vorgesehen sein. In der Ausführungsform nach Fig. 2 ist ein formschlüssiger Axialanschlag vorgesehen, etwa in Form eines Sprengringes, welcher in einer umlaufenden Nut im Sitz 92 des Lagergehäuses 9 geführt ist. In der Ausführungsform nach Fig. 3 hingegen sorgt eine konusförmige Form des Sitzes 92 für einen kraftschlüssigen Anschlag. Der Dichtring 4 wird in Richtung der Kante 101 auf den konusförmigen Sitz verschoben, bis er kraftschlüssig ansteht.

Im Betrieb wird der Dichtring 4 je nach Druckverhältnis im Spalt auf den beiden gegenüberliegenden Seiten zusätzlich in Richtung der Federkraft, also zur Kante 101 hin-, oder aber entgegen der Richtung der Federkraft, also von der Kante 101 weggedrückt. Durch geeignete Wahl der Federkraftstärke kann verhindert werden, dass sich im letzteren Fall der Dichtring 4 im Bereich der Dichtgrenzfläche von der Kante 101 löst.

Bei Volllastbetrieb des Motors herrscht im Radrückraum 6 des Verdichters 7 ein höherer Druck als im Ölraum 1 des Lagergehäuses 5. Über dem Dichtring 4 liegt eine positive Druckdifferenz an, welche der Federkraft entgegenwirkt. Eine entgegengesetzt wirkende, negative Druckdifferenz liegt über dem Dichtelement an, wenn im Radrückraum 6 des Verdichters 7 ein Unterdruck gegenüber dem Ölraum 1 herrscht.

Eine derartige, negative Druckdifferenz verstärkt die äussere Federkraft, die auf den Dichtring 4 einwirkt.

Zusätzlich zur Federkraftstärke hat auch die Form und Anordnung des Dichtringes 4 im Spalt zwischen dem Lagergehäuse 9 und der Scheibe 10 einen Einfluss darauf, wie stark die von dem über dem Dichtring anliegenden Druckgefälle erzeugten Druckkräfte den Dichtring in die eine oder andere Richtung drücken. Da die positive Druckdifferenz einen grösseren absoluten Betrag erreicht ist vorteilhafterweise die wirksame Fläche A des Dichtringes 4 in Richtung des Verdichters 7 kleiner zu wählen als die wirksame Fläche B des Dichtringes 4 in Richtung des Ölraumes 1 des Lagergehäuses 5.

Der Dichtring 4 kann optional gegen Verdrehen gesichert werden, durch eine kraft- oder formschlüssige Verbindung des Dichtringes 4 mit dem Lagergehäuse 9.

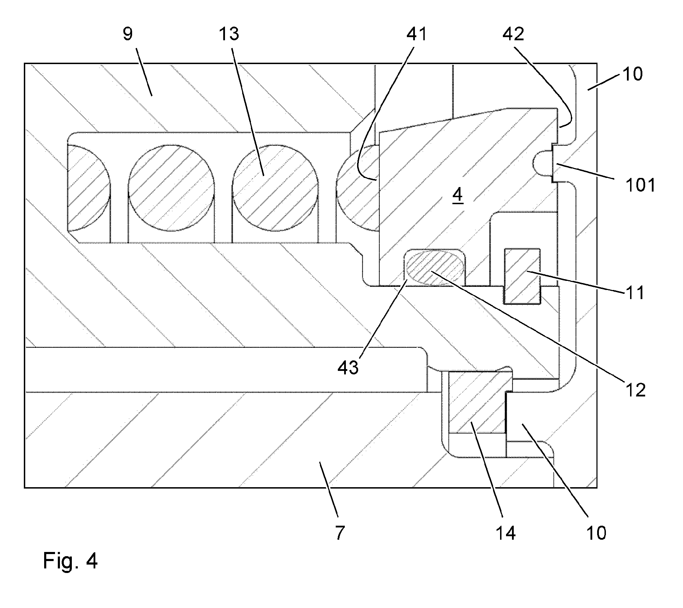

Wie in Fig.4 dargestellt, kann die erfindungsgemässe Abdichtung mit einem zusätzlichen Dichtelement im Spalt zwischen den feststehenden Gehäuseteilen und den rotierenden Elementen, etwa einem oder mehreren Kolbenringen 14 zwischen dem Lagergehäuse 9 und dem Verdichterrad 7, ergänzt werden. Die beiden dargestellten Dichtelemente, der Dichtring 4 und der Kolbenring 14, wirken beide in Richtung der Turbinenseite, im Spalt zwischen den feststehenden Gehäuseteilen und den rotierenden Elementen wirken sie jedoch in entgegengesetzter Richtung. Der Spalt erfährt eine Umlenkung wobei der Kolbenring vor der Umlenkung und der Dichtring nach der Umlenkung angeordnet ist.

### Bezugszeichenliste

- 1: Ölraume
- 2: Welle
- 3: Lagern
- 4: Dichtring
- 5: Lagergehäuse
- 6: Radrückraum
- 7: Verdichter
- 70: Verdichtergehäuse
- 8: Turbine
- 80: Turbinengehäuse
- 9: Lagergehäuse
- 91: Bohrung im Lagergehäuse
- 92: Sitz am Lagergehäuse
- 10: Scheibe
- 101: Kante
- 11: Anschlag
- 12: Dichtelement
- 13: federnde(s) Element(e)
- 14: Kolbenring
- 41, 42: Stirnseiten des Dichtringes
- 43: Nut im Dichtring

## Patentansprüche

1. Abgasturbolader, umfassend ein Lagergehäuse (5) mit einer zentralen Bohrung, mindestens ein in der Bohrung angeordnetes Lager (3), eine in der Bohrung angeordnete, in dem mindestens einen Lager gelagerte Welle (2), ein auf der Welle (2) angeordnetes Verdichterrad (7), sowie Dichtmittel, welche sich in der Bohrung zwischen dem Verdichterrad (7) und dem Lager (3) befinden, wobei die Dichtmittel mindestens ein ringförmiges Dichtelement (4, 14) umfassen, welches Dichtelement (4, 14) mit einer mit der Welle rotierenden Kante (101) eine Dichtgrenzfläche bildet, **dadurch gekennzeichnet, dass** mindestens ein Dichtelement (4) mit einer durch ein Federelement (13) bewirkten Federkraft in Richtung der Wellenkante (10) beaufschlagt ist.

2. Abgasturbolader nach Anspruch 1, wobei zwischen der Welle und dem Lagergehäuse ein Spalt ausgebildet ist, und das mit der Federkraft beaufschlagte Dichtelement (14) in diesem Spalt angeordnet ist, wobei sich bei Unterdruck im Bereich des Verdichterrades (7) über dem Dichtelement (4) eine Druckdifferenz ausbildet, welche das Dichtelement (4) mit einer Kraft beaufschlagt, wobei diese Kraft und die Federkraft in die gleiche Richtung wirken.

3. Abgasturbolader nach Anspruch 1, wobei zwischen der Welle und dem Lagergehäuse ein Spalt ausgebildet ist, und das mit der Federkraft beaufschlagte Dichtelement (14) in diesem Spalt angeordnet ist, wobei sich bei Überdruck im Bereich des Verdichterrades (7) über dem Dichtelement (4) eine Druckdifferenz ausbildet, welche das Dichtelement (4) mit einer Kraft beaufschlagt, und diese Kraft der durch das Federelement (13) auf das Dichtelement (4) bewirkten Federkraft entgegenwirkt.

4. Abgasturbolader nach Anspruch 1, wobei zwischen der Welle und dem Lagergehäuse ein Spalt ausgebildet ist, welcher sich vom Verdichterrad (7) in Richtung des Lagers (3) erstreckt, wobei der Spalt mindestens eine Umlenkung in entgegengesetzter Richtung erfährt, und wobei das mit der Federkraft beaufschlagte Dichtelement (14) im in entgegengesetzter Richtung verlaufenden Spaltabschnitt angeordnet ist.

5. Abgasturbolader nach einem der Ansprüche 1 bis 4, wobei es sich beim Federelement um eine Feder (13), oder ein Federpaket, oder ein Elastomer oder eine das Dichtelement (4) mit Druckluft beaufschlagende Druckluftzuführung handelt.

6. Abgasturbolader nach einem der Ansprüche 1 bis 4, wobei das Dichtelement (4) in Richtung der Wellenachse verschiebbar auf einem Sitz (92) des Lagergehäuses (9) angeordnet ist und mittels des Federelements (13) in axialer Richtung gegen die Kante (101) gedrückt wird.

7. Abgasturbolader nach Anspruch 6, wobei ein Anschlag (11) des Lagergehäuses die axiale Verschiebbarkeit des Dichtelements (4) begrenzt.

8. Abgasturbolader nach Anspruch 6, wobei das Dichtelement (4) zum Sitz (92) des Lagergehäuses (9) mittels eines elastischen Elements (13) abgedichtet ist.

9. Abgasturbolader nach einem der Ansprüche 2 bis 4, wobei das Dichtelement (4) zu dem zum Verdichter führenden Spalt eine kleinere Angriffsfläche aufweist als zu dem zum Lager (3) führenden Spalt.

10. Abgasturbolader nach einem der Ansprüche 1 bis 4, wobei das Dichtelement (4) in Kombination mit einem oder mehreren Kolbenringen eingesetzt wird.
